Europäisches Patentamt

European Patent Office

Office européen des brevets

(11) Publication number: **0 229 734**
**A2**

# EUROPEAN PATENT APPLICATION

(21) Application number: 87300388.3

(22) Date of filing: 16.01.87

(51) Int. Cl.⁴: **G 06 F 9/26**

(30) Priority: 16.01.86 JP 6672/86

(43) Date of publication of application:
22.07.87 Bulletin 87/30

(84) Designated Contracting States: DE FR GB

(71) Applicant: Kabushiki Kaisha Toshiba
72, Horikawa-cho Saiwai-ku
Kawasaki-shi Kanagawa-ken 210 (JP)

(72) Inventor: Miyoshi, Akio c/o Patent Division
Toshiba Corp. Prin. Office 1-1 Shibaura 1-chome
Minato-ku Tokyo (JP)

(74) Representative: Freed, Arthur Woolf et al
MARKS & CLERK 57-60 Lincoln's Inn Fields
London WC2A 3LS (GB)

(54) Microprogram control device.

(57) A microprogram control device adapted for use with a microcomputer, which comprises a machine instruction decoder (II) to sequentially decode machine instructions (8) fetched from an external memory of a computer to create a microcode start address for each machine instruction, and a counter (I2) connected to said decoding means (I7) to count up in response to the receipt of each microcode start address (I0) from the machine instruction decoder (II) to create a required number of microcode addresses. The microprogram control device further includes a microcode storage unit (I3) comprising a decoder area (I3a) responsive to said microcode addresses (I0) from the counter (I2) to designate microcodes corresponding to said microcode addresses, and a memory area (I3b) in which the microcodes of microprograms defining the machine instructions are stored. When each start address is input from the decoder (II) to the counter (I2), the decoder area (I3a) sequentially designates microcodes in accordance with each of the microcode start addresses to provide access to memory area (I3b) of the microcode storage unit (I3), so that a predetermined microcode (n) is read on the basis of the microcode designation by the decoder area (I3a) to a microcode register (I4). The microcode (n) latched in the register (I4) is output to control operation of other circuits (not shown), and at least a part of the microcode (Sc) in the register (I4) is input to the counter (I2). By controlling the count operation of the counter (I2) with this control output bit(s) (Sc), a microprogram control device with variable microstep functions is realized, thereby reducing chip area without reducing operating speed. When the microcodes of the microprograms defining different machine instructions are partially common to each other, the microprogram control device of the present invention is value insensitive for a certain bit or bits of the common microcode addresses with a view to realizing access of the common microcodes by the plurality of machine instructions. Thus, it becomes pssible to reduce memory reqirements of the microcode storage unit (I3).

EP 0 229 734 A2

Bundesdruckerei Berlin

**Description**

## MICROPROGRAM CONTROL DEVICE

The present invention relates generally to a microprogram control device, and more particularly, to a microprogram control device used in a computer, for example a microcomputer or microprocessor.

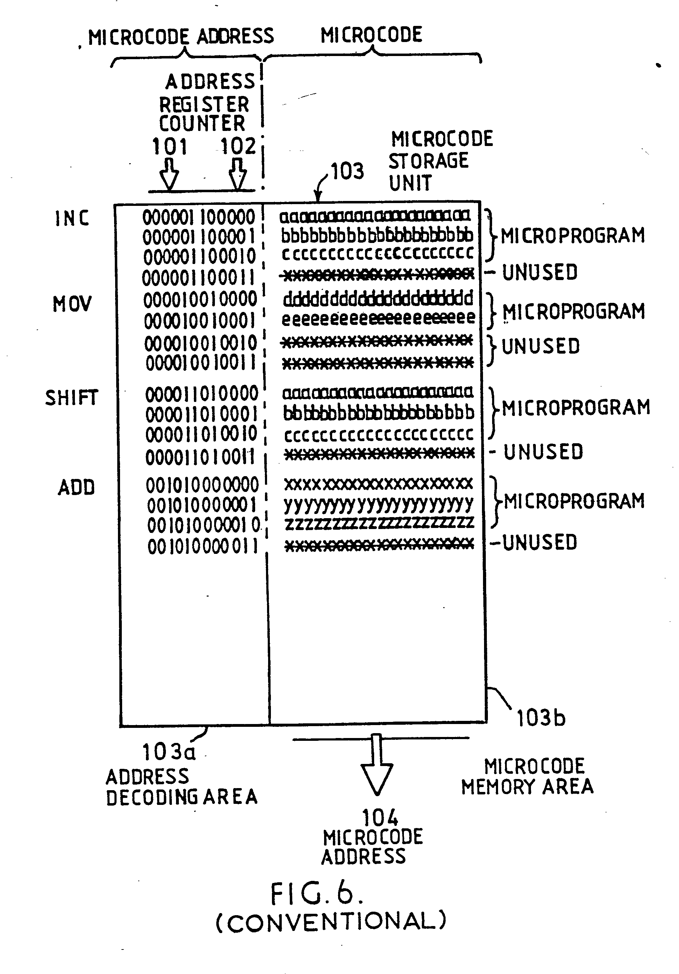

Many microcomputers employ a microprogram control device or system. An example of a conventional microprogram control device is shown in Fig. 5. A machine instruction code from a program memory (not shown) or the like is directly input to an address register 101. This address register 101 produces an output of 8 bits, which is a high-order bit of a microcode address. A counter 102, reset in synchronism with the fetch of the machine instruction code sent to the register 101, produces an output of 4 bits, which is a low-order bit of the microcode address.

These two outputs constituting the microcode address are input to an address decoding area 103a, which is part of a microcode storage unit 103, and can be in the form of, for example, a PLA (programmable logic array). The address decoding area 103a of microcode storage unit 103 decodes the input microcode address, causing a microcode stored in the addressed segment of a microcode memory area 103b to be output to a microinstruction register 104. Next, the contents of the counter 102 are incremented without alternating the contents of the address register 101, thus causing sequential microcode addresses to be designated.

The convention microcode storage unit 103 is configured as shown in Fig. 6. The address decoding area 103a has a series of microcode addresses. Each microcode address has, for example, 12 bits. Associated with each microcode address is a microcode of, for example, 21 bits, which microcode is stored within the microcode memory area 103b.

As seen from Fig. 6, with respect to four machine instructions of INC, MOV, SHIFT and ADD, a microprogram having microcodes of 2 steps are stored for machine instruction MOV, and microcodes of 3 steps are stored for machine instructions INC, SHIFT, and ADD, respectively.

More particularly, with respect to the INC instruction, the microprogram having three microcodes of "aa ...a", "bb ... b", and "cc ...c" is stored. With respect to the MOV instruction, the microprogram having two microcodes of "dd ... d" and "ee ... e" is stored.

Further, with respect to the SHIFT instruction, the microprogram having three microcodes of "aa ... a", "bb ... b", and "cc ...c", identical to the three microcodes of the INC instruction) is stored. In addition, with respect to the ADD instruction, the microprogram having three microcodes of "xx ...x", "yy ... y", and "zz ... z" is stored. Note that ares represented by "** ... *" are unnecessary memory areas since no microcodes for the given machine instruction microprogram need to be stored in these unused memory areas.

The above-mentioned conventional microprogram control device is required to produce a microprogram for each machine instruction. To create the low-order bit of the microcode address, the counter 102 is used. The counter 102 is reset for each fetch of a machine instruction being called. By incrementing this counter, microcodes corresponding to each instruction are accessed in sequence from the start address of the microprogram being outputted. With the address decoder as employed in the above-mentioned conventional microcode control device, the microstep is fixed to a preselected number of steps, for example, four steps. When machine instructions have microprograms with steps which are not multiples of the preselected number of steps (for example, integers of four steps), there is unused area in a memory, which results in increased chip area.

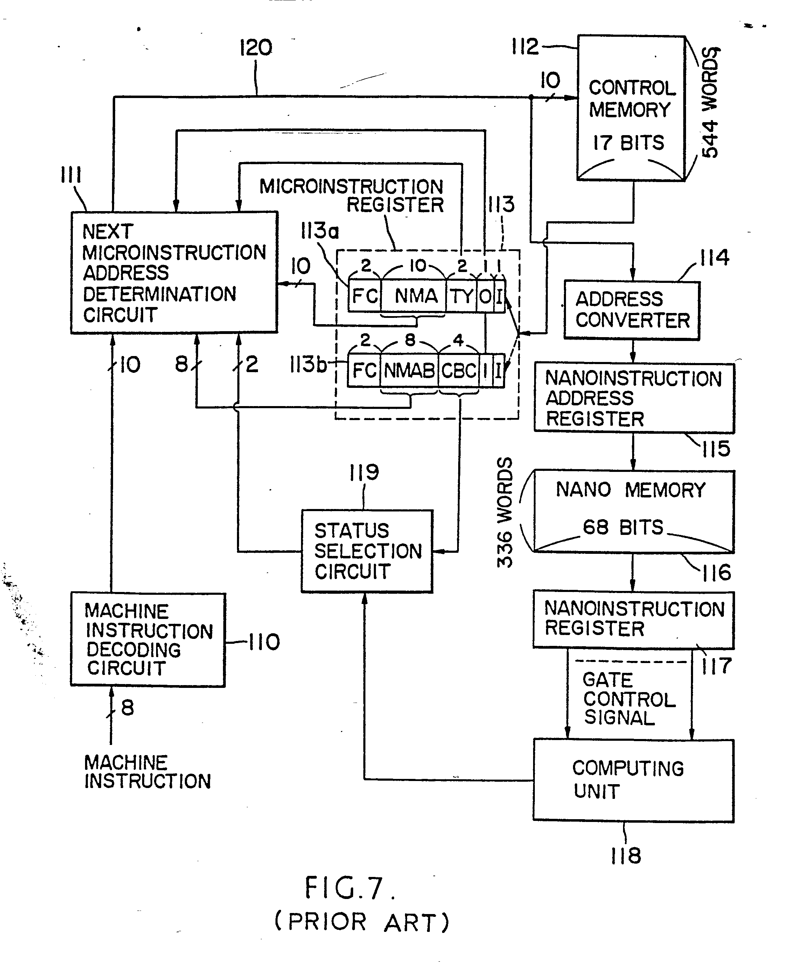

Another example of a conventional microprogram control device will be described with reference to Fig. 7.

A machine instruction is decoded by a machine instruction decoding circuit 110. The circuit 110 is typically comprised of a PLA, such that microinstruction addresses from the circuit 110 are input to a next microinstruction address determination circuit 111. A next microinstruction address output by the circuit 111 is input to a control memory or store 112 and to an address converter 114.

The control memory 112 then outputs a microinstruction address to a microinstruction register 13. This microinstruction register 113 comprises a conditional branch instruction 113b, and another instruction 113a. To execute conditional branch instruction 113b, a control memory address, (that is, the next microinstruction address of the concerned microinstruction) is first converted into a nanoinstruction address by the address converter 114. The nanoinstruction is then stored in a nanoinstruction register 115.

The microinstruction 113a has an NMA (next microinstruction address) field that represents an address of the next microinstruction. When a TY field represents ""00"", the NMA field is output to the microinstruction address bus 120. When the TY field represents a value other than ""00"", the microinstruction address is determined by the output of the machine instruction decoding circuit 110. To execute the conditional branch instruction 113b, status information of 2 bits selected by a CBC field is coupled to a NMAB (next microinstruction address branch) field by a status selection circuit 119.

A nanoinstruction of an address stored in a nanoinstruction address register 115 is output from a nanomemory 116, which nanoinstruction is then stored in nanoinstruction register 117. A computing unit 118 performs predetermined computations in accordance with this nanoinstruction. The status information, for example, a carry flag, etc., produced by this computation is input to the status selection circuit 119. Status selection circuit 119 selects the status information from the computing unit 118 based

on the content of the CBC field of the microinstruction II3b, and then outputs to the next microinstruction address determination circuit III.

Therefore, in the above-mentioned conventional microprogram control device, machine instructions are converted into microinstruction addresses in the machine instruction decoding circuit II0. Microinstructions corresponding to the next microinstruction address are output from the control memory II2. Accordingly, this conventional device can deal with nanoinstructions common to different machine instructions, which results in reduced memory area. However, a control memory II2 that stores the next microinstruction address portion corresponding to the NMA field is required. In addition, extra time to determine next microinstruction addresses is required by the microcomputer. Thus, the employment of such a conventional microprogram control device results in increased chip area and lower operating speed of the microcomputer.

With the above in view, an object of the current invention is to provide a microprogram control device which improves operating speed and decreases semiconductor chip area.

Another object of the present invention is to realize a microprogram control device that has both a variable microstep function and simplified circuit construction.

According to one embodiment of the present invention, there is provided a microprogram control device adapted for use with a microcomputer which comprises: decoding means for decoding machine instruction codes input thereto to create microcode start addresses for each of said machine istruction codes: counter means connected to said decoding means operative to count in response to the receipt of each of the microcode start addresses to produce a required number of microcode addresses and storage means connected to said counter means comprising a decoding area responsive to the receipt of each of said microcode addresses from the counter means to produce microcodes corresponding to said microcode addresses, and a memory area in which said microcodes of the microprograms defining said machine instruction codes are stored whereby when each microcode start address is input from the decoding means to the counter means, the decoding area sequentially designates microcodes in accordance with said each of said microcode start address and provides an access to the memory area. A predetermined microcode is read on the basis of the microcode designation by the decoding area, and is provided for controlling circuit means.

Embodiments of the present invention will now be described in detail by way of example only and with reference to the accompanying drawings, in which :

Figure I is a block diagram illustrating an embodiment of microprogram control device according to the present invention;

Figure 2 is a schematic view diagrammatically showing the operation of the device of the present invention shown in Figure I;

Figures 3A to 3C are explanatory views showing microcode storage conditions when microcodes defining different machine instructions are partially common to each other, wherein Figures 3A and 3B are examples with conventional microprogram control devices, and Fig. 3C is an example with a microprogram control device according to the present invention;

Figure 4 is a block diagram illustrating another embodiment of a microprogram control device according to the present invention;

Figure 5 is a block diagram illustrating a conventional microprogram control device;

Figure 6 is a explanatory view diagrammatically showing the operation of the conventional device shown in Fig. 5; and

Figure 7 is a block diagram illustrating another conventional microprogram control device.

Referring to Fig. I, there is shown in block form an embodiment of a microprogram control device according to the present invention.

The microprogram control device of this embodiment comprises a machine instruction decoder II, preferably in the form of a PLA or read only memory (ROM), that sequentially decodes machine instructions of, for example, 8 bits that are fetched from an external memory (not shown) of a computer (not shown). Microcode start addresses of I0 bits per each machine instruction are generated, and a counter I2 counts up to generate the required number of microcode addresses. Incremental operation of the counter I2 is synchronized by a clock signal CLK. A control signal or control bit(s) Sc (to be refered to later) is input to the counter I2 at this point for rendering variable microstep functions in the microprogram control device.

The microprogram control device further includes a microcode storage unit I3 of two area I3a and I3b and is made up of, for example, a PLA or ROM. The decoding area I3a of microcode storage unit I3 responds to microcode addresses from the counter I2, and generates microcode addresses. The memory area I3b of microcode storage unit I3 stores the plurality of microcodes defining machine instructions in accordance with respective start addresses. When each start address is input from the counter I2 to the address decoding area I3a, the address decoding area I3a sequentially designates to the memory area I3b a microcode address per each microstep, thus predetermined microcodes of n bits are stored in the mirocode memory area I3b based on the address provided by the address decoding area I3a.

The microcode read from the microcode memory area I3b is output to a microcode register I4. Microcodes latched in the microcode register I4 are output in order to control the operation of subsequent circuits (not shown). Part of the output microcode from the microcode register I4 becomes the control output bit(s) Sc, and is input back to the counter I2. The control output Sc controls the counter I2. Thus, the counter I2 either counts up to create microcode addresses per each machine instruction, or shifts to loading the next machine instruction depending upon the logic state of the control signal Sc.

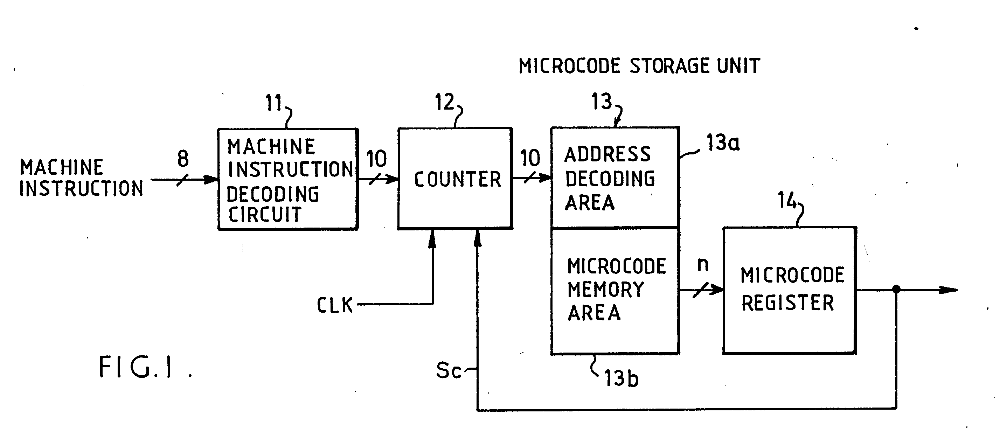

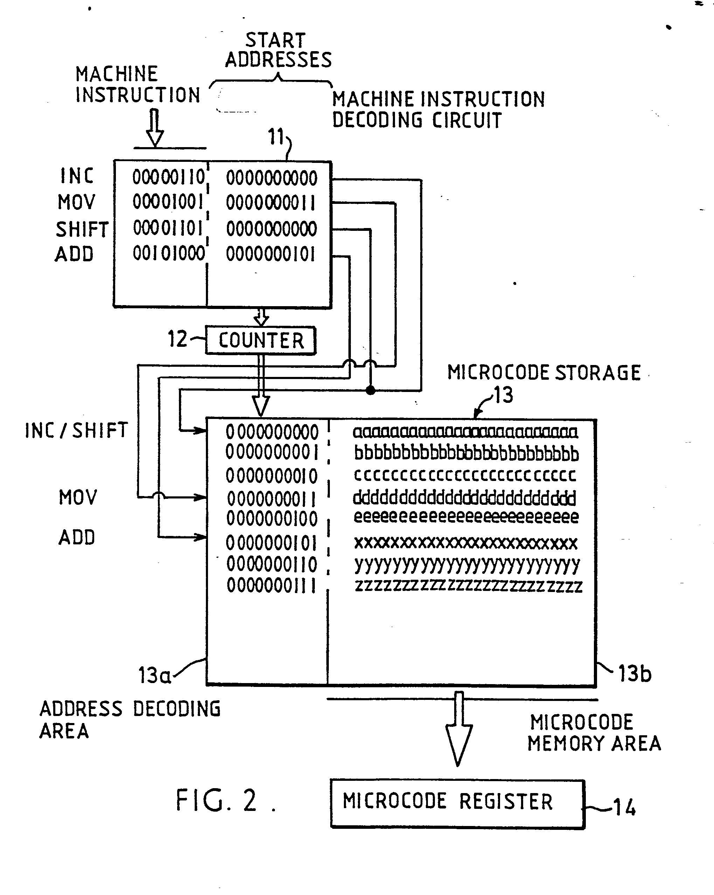

The machine instruction decoding circuit Il and the microcode storage unit I3 will now be described in detail with reference to Fig. 2.

The machine instruction decoding circuit Il is a matrix circuit that decodes machine instruction codes and creates start addresses of microcodes correspondingly stored in the microcode storage unit I3. The decoding circuit Il effects said decoding operation in connection with the example shown in Fig. 2 as follows.

With respect to a machine instruction code "00000II0" of the INC instruction, a start address "0000000000" is read. With respect to a machine instruction code "0000I00I" of the MOV instruction, a start address "000000000II" is read. Further, with respect to a machine instruction code "0000II0I" of the SHIFT instruction, a start address "0000000000" is read. In addition, with respect to a machine instruction code "00I0I000" of the ADD instruction, a start address "0000000I0I" is read. These start addresses are input to the microcode storage unit I3, and are subsequently incremented by the counter I2.

In the microcode memory area I3b of the microcode storage unit I3, a plurality of microcodes are stored in correspondence with respective microcode addresses designated by the address decoding area I3a. Namely, a microcode represented by "aa ... a" is stored at address 0000000000, a microcode represented by "bb ... b" is stored at address 000000000I, a microcode represented by "cc ... c" is stored at address 00000000I0, a microcode represented by "dd ... d" is stored at address 000000000II, a microcode represented by "ee ... e" is stored at address 0000000I00, a microcode represented by "xx ... x" is stored at address 0000000I0I, a microcode represented by "yy ... y" is stored at address 0000000II0, and a microcode represented by "zz ... z" is stored at address 0000000III.

When the INC instruction is input to the machine instruction decoding circuit Il as a machine instruction, the address "0000000000" is input to the microcode storage unit I3, and the microcode represented by "aa ... a" is output. Subsequently, when the counter I2 counts up in synchronism with the clock signal CLK, the microcode of "bb ... b" corresponding to the next address "000000000I" is output. Likewise, when the counter I2 further counts up, the microcode of "cc ... c" corresponding to the next address "00000000I0" is output. Thus, a microprogram having an output of three steps in respect to the INC instruction is generated.

When the MOV instruction is input to the machine instruction decoding circuit Il, the address "000000000II" is input to the microcode storage unit I3, and the microcode represented by "dd ... d" is output. Subsequently, when the counter I2 counts up by one in synchronism with the clock signal CLK, the microcode "ee ... e" corresponding to the next address "0000000I00" is output. Thus, a microprogram having an output of two steps in respect of the MOV instruction is generated.

The SHIFT instruction is generated identically to the INC instruction. Accordingly, when the SHIFT instruction is input to the machine instruction decoding circuit Il, the same address "0000000000" as the INC instruction is input to the microcode storage unit I3. As previously described, a microprogram output having three steps represented by "aa ... a", "bb ... b" and "cc ... c" is sequentially generated.

When the ADD instruction is input to the machine instruction decoding circuit Il, the address "0000000I0I" is input to the microcode storage unit I3, and the microcode represented by "xx ... x" is output. Subsequently, when the counter I2 counts up by one in synchronism with the clock signal CLK, the microcode "yy ... y" corresponding to the next address "0000000II0" is output. When the counter I2 further counts up by one in synchronism with the clock signal CLK, the microcode "zz ... z" corresponding to the next address "0000000III" is output. Thus, a microprogram output having three steps in respect to the ADD instruction is generated.

Where microcodes defining the machine instruction are partially common to each other, the present invention makes possible the generation of microprograms with less memory capacity requirements than conventional devices, without reducing operating speed, by configuring the microcode storage unit I3 in a manner now described.

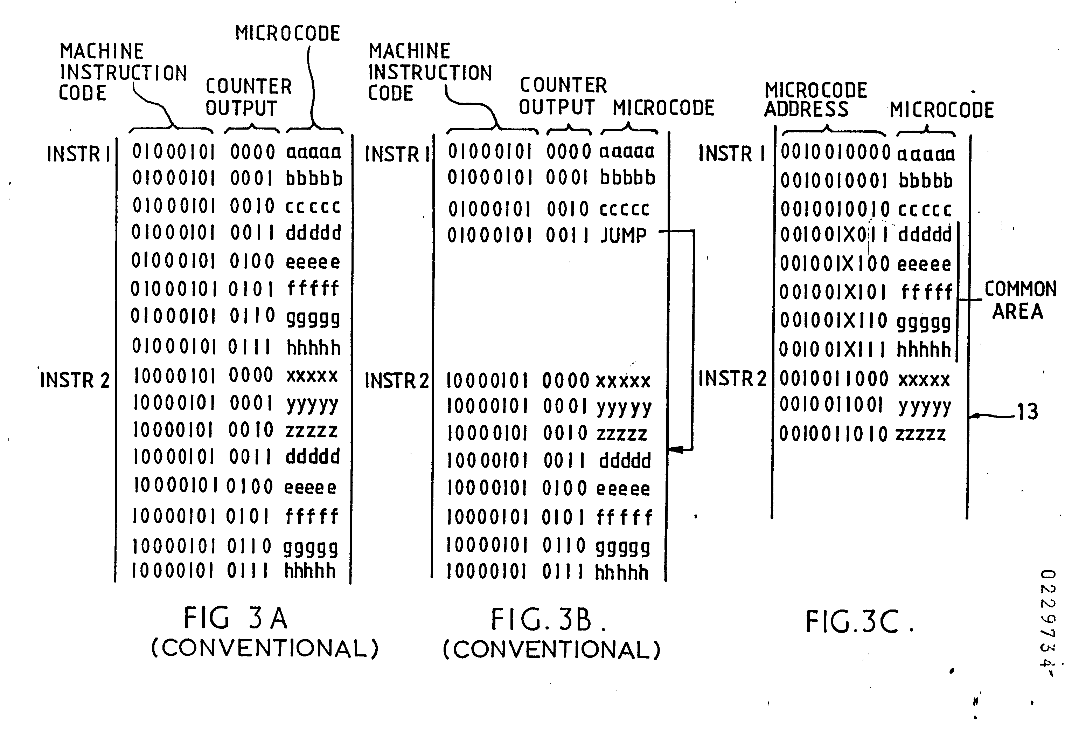

Referring to Fig. 3, consider a case where machine instructions INSTRI and INSTR2, each having microprograms of eight steps, have the same microcodes, respectively. Namely, the machine instruction INSTRI has a microprogram having eight microcode steps shown as "aa ... a", "bb ... b", "cc ... c", "dd ... d", "ee ... e", "ff ... f", "gg ... g" and "hh ... h", respectively, and the machine instruction INSTR2 has a microprogram having eight microcode steps shown as "xx ... x", "yy ... y", "zz ... z", "dd ... d", "ee ... e", "ff ... f", "gg ... g" and "hh ... h".

In conventional microprogram control devices, shown in Figs. 5 and 6, all microcodes of microprograms, including common microcodes, are either stored in a memory per each machine instruction (Fig. 3A), or a microcode of the fourth step of the microprogram of one machine instruction INSTRI is used as a jump (Fig. 3B). In the conventional case shown in Fig. 3A, since common microcodes are also stored for the microprogram per each machine instruction, a large capacity microcode storage unit I03 is required, which is inefficient due to lower operating speed and is uneconomical due to wasted storage area. Further, although the conventional microprogramming system shown in Fig. 3B reduces memory requirements, extra time for the microcomputer is required for the necessary jump. This jump step results in lower machine execution speed of the microcomputer.

In contrast, as shown in Fig. 3C, this embodiment according to the present invention can provide a value insensitive or "don't care" function for a certain number of addresses for microcodes common to microprograms of successive machine instructions INSTRI and INSTR2. The present invention permits microprogramming to be done with reduced memory capacity and without lowering operating speed of the microcomputer.

For example, with respect to the machine instruction INSTRI, the microcode "aa ... a" of the microprogram is stored at an address 0010010000, the microcode "bb ... b" is stored at an address 0010010001, and the microcode "cc ... c" is stored at an address 0010010010. With respect to machine instruction INSTR2, the microcode "xx ... x" of the microprogram is stored at address "0010011000, the microcode "yy ... y" is stored at address 0010011001, and the microcode "zz ... z" is stored at address 0010011010.

Common microcodes of the two microprograms are stored in the microcode storage unit 13, with the fourth bit from the lowest or rightmost bit of each address for the common microcodes being a "don't care" bit, which can be arbitrarily defined in its logical state. For example, the microcode "dd ... d" is stored at an address 00100Ix0II (x represents a bit which undergoes the "don't care" operation), the microcode "ee ... e" at an address 00100Ix100, the microde "ff ... f" at an address 00100Ix10I, the microcode "gg ... g" at an address 00100Ix110, and the microcode "hh ... h" at an address 00100Ix1II.

Since the fourth from the rightmost bit of each address for the common microcodes is a "don't care" bit, access to the common microcodes is possible whether the "don't care" bit represents "o" or "I". Accordingly, for the machine instruction INSTRI, it is possible to read out the corresponding microcodes of five bits by initially setting the counter 12 to "0010010000", thereafter the counter 12 sequentially increments the contents thereof. Further, for the machine instruction INSTR2, it is possible to read microcodes represented by "xx ... x", "yy ... y", "zz ... z", "dd ... d", "ee ... e", ..., and "hh ... h" by initially setting the counter to "0010011000". thereafter the counter 12 sequentially increments the contents thereof.

As stated above, this embodiment of the present invention operates with microcodes common to the microprograms of different machine instructions, thus making it possible to reduce memory requirements of the microcode storage unit 13. Further, since branch operations, for example, jumps, etc., are not needed, execution time of the microcomputer remains constant. In addition, unlike conventional devices, the present invention does not require the control memory for the next address of the microprogram.

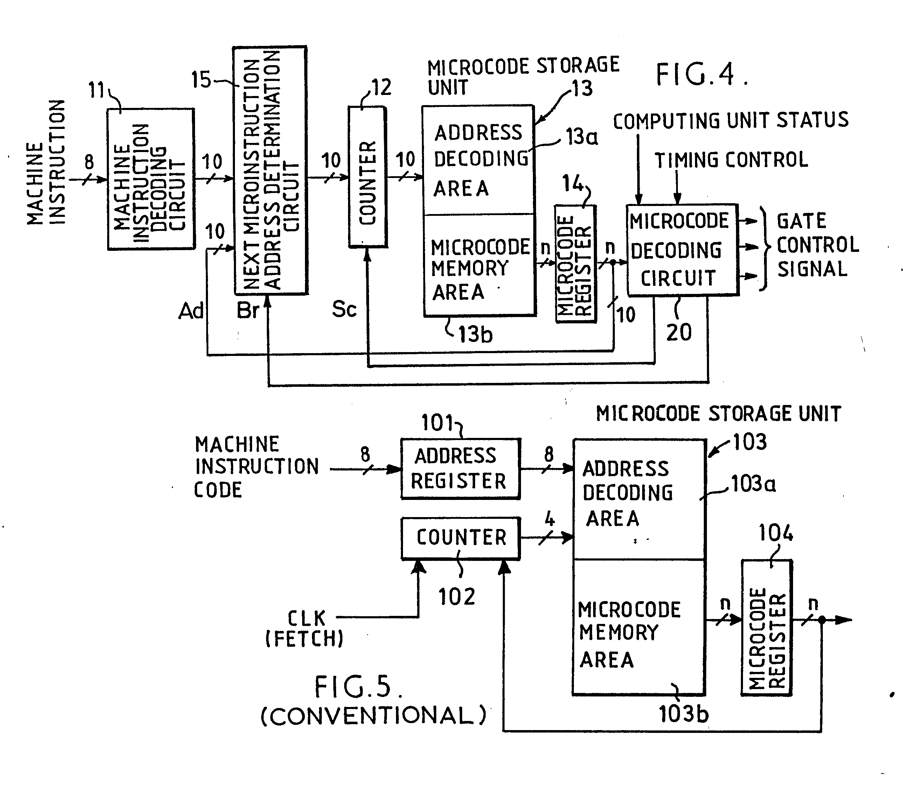

Referring now to Fig. 4, there is shown yet another embodiment of a microprogram control device according to the present invention. This embodiment is characterized by a next microinstruction address determination circuit 15 being provided between the machine instruction decoding circuit 11 and the counter 12 and a microcode decoding circuit 20 connected to the microcode register 14. The next microinstruction address determination circuit 15 is a multiplexer to select either a start address of the microinstruction address from the machine instruction decoder 11 of signal Ad (i.e. a start address of the next microinstruction contained in the microcode), depending upon a control signal Br. The control signal Br is output from the microcode decoding circuit 20. The control signal Sc, also output from the microcode decoding circuit 20, is input to counter 12. The control signals Br and Sc are provided by decoding the microcode signals, computing unit status signals and timing control signals which include the machine instruction fetch status. The control signal Sc is used to set the counter 12 with the value from the next microinstruction address determination circuit when a new machine instruction is started or a jump microinstruction is executed. Thus, this embodiment designates branch operations used to generate microprograms of various kinds of machine instructions.

The present invention can easily be modified to perform similar functions without being limited to the above-mentioned embodiments. For example, the counter may be provided with an area of a high-order bit assigned to a register and a remaining area assigned to the counter itself. In addition, where a plurality of "don't care" bits are provided, it is possible to cope with microcodes common to the microprograms of three or more machine instructions.

The foregoing description of the preferred embodiment of the invention has been presented for purposes of illustration and description, and is not intended to be exhaustive or to limit the invention to the precise forms disclosed, since many obvious modifications and variations are possible in light of the above teaching.

The embodiments were chosen and described in order best to explain the principles of the invention and its practical application, thereby to enable others skilled in the art best to utilize the invention in various embodiments and with various modifications as are suited to the particular use contemplated.

## Claims

I. A microprogram control device adapted for use with a microcomputer, which comprises:

decoding means (II) for decoding machine instruction codes (8) input thereto;

counter means (I2); and

storage means (I3) comprising a decoding area (I3a) responsive to microcode addresses and a memory area (I3b) in which microcodes of microprograms defining said machine instruction codes are stored;

characterised in that said decoding means decodes said machine instruction codes (8) to create a microcode start address (I0) for each of said machine instruction codes (8): in that said counter means (I2) is connected to said decoding means (II), for counting in response to the receipt of each of said microcode start address (I0) to produce a required number of microcode addresses (I0); in that said decoding area (I3a) is responsive to said microcode addresses (I0) from said counter means (I2) to designate microcodes corresponding to said microcode addresses (I0); and in that at least one microcode of one instruction code and at least one microcode of another instruction code are common and said storage means (l3) has a value insensitive (or "don't care") function for said at least one common microcode.

2. A microprogram control device as claimed in claim l, further characterized in that said decoding means (ll) is a matrix circuit that decodes machine instruction codes and creates start addresses.

3. A microprogram control device as claimed in claim l, further characterized in tht said counter means (l2) comprises means for counting up to generate the required number of microcode addresses.

4. A microprogram control device as claimed in claim l, further characterized in that said decoding area (l3a) comprises a programmable logic array or a read only memory.

5. A microprogram control device as claimed in claim l, further characterized in that said memory area (l3b) comprises a programmable logic array or a read only memory.

6. A microprogram control device as claimed in claim l, further characterized in that at least one of the microcode address in said decoding area (l3a) is used as a value insensitive (or "dont care") bit for said value insensitive (or "don't care") function.

7. A microprogram control device adapted for use with a microcomputer, which comprises:
    decoding means (ll) for decoding machine instruction codes (8) input thereto;
    counter means (l2);
    storage means (l3) connected to said counter means and comprising a decoding area (l3a) responsive to microcode addresses and a memory area (l3b) in which microcodes of microprograms defining said machine instruction codes are stored; and
    register means (l4), connected to said storage means (l3), for latching the microcodes read out of said memory area (l3b), for outputting said microcodes for controlling circuit means, and for outputting at least a part of said microcodes for controlling said counter means (l2)
    characterised in that said decoding means decodes said machine instruction codes (8) to create a microcode start address (l0) for each of said machine instruction codes (8); in that said counter means (l2) is connected to said decoding means (ll), for counting in response to the receipt of each of said microcode start address (l0) to produce a required number of microcode addresses (l0); and in that said decoding area (l3a) is responsive to said microcode addresses (l0) from said counter means (l2) to designate microcodes corresponding to said microcode addresses (l0).

8. A microprogram control device adapted for use with a microcomputer, which comprises:
    decoding means (ll) for decoding machine instruction codes (8) input thereto;
    counter means (l2):
    storage means (l3) connected to said counter means and comprising a decoding area (l3a) responsive to microcode addresses and a memory area (l3b) in which microcodes of microprograms defining said machine instruction codes are stored; and
    register means (l4), connected to said storage means (l3), for latching the microcodes read out of said memory area (l3b), for outputting said microcodes thus latched to circuit means to be controlled, and for outputting at least a part of said microcodes back to said counter means (l2) as a control signal (Sc);
    characterised in that said decoding means decodes said machine instruction codes (8) to create a microcode start address (l0) for each of said machine instruction codes (8); in that said counter means (l2) is connected to said decoding means (ll), for counting up in response to the receipt of each of said microcode start address (l0) to produce a required number of microcode addresses (l0); in that said decoding area (l3a) is responsive to said microcode addresses (l0) from said counter means (l2) to designate microcodes corresponding to said microcode addresses (l0); and in that said microcodes are stored in advance in accordance with said microcode start addresses acting as start addresses, whereby when each of said microcode start addresses is input from said decoding means (ll) to said counter means (l2), said decoding area (l3a) is operative to sequentially designated microcodes in accordance with said each of said microcode start addresses to provide access to said memory area (l3b), so that a predetermined microcode is read on the basis of the microcode designation by said decoder area (l3a).

9. A microprogram control device adapted for use with a microcomputer, which comprises:
    decoding means (ll) for decoding machine instruction codes (8) input thereto; and
    storage means (l3) comprising a decoding area (l3a) responsive to microcode addresses and a memory area (l3b) in which microcodes of microprograms defining said machine instruction codes are stored;
    characterised in that said decoding means decodes said machine instruction codes (8) to create a microcode start address (l0) for each of said machine instruction codes (8); in that said decoding area (l3a) is responsive to microcode addresses from said decoding means (ll) to designate microcodes corresponding to said microcode addresses; and in that when the contents of microcodes in said memory area (l3b) definig at least two different machine instruction codes in said machine instruction codes are partially common to each other, said storage means (l3) has a value insenstive (or "don't care") function for a certain bit or bits constituting the address(es) of said common microcode(s).

l0. A microprogram control device adapted for use with a microcomputer, which comprises:
    decoding means (ll) for decoding machine instruction codes (8) input thereto;

counter means (I2);

storage means (I3) connected to said counter means and comprising a decoding area (I3a) responsive to microcode addresses and a memory area (I3b) in which microcodes of microprograms defining said machine instruction codes are stored; and

register means (I4), connected to said storage means (I3), for latching the microcodes read out of said memory area (I3b), for outputting said microcodes thus latched to circuit means to be controlled and for outputting at least a part of said microcodes back to said counter means (I2) as a control signal (Sc);

characterised in that said decoding means decodes said machine instruction codes (8) to create a microcode start address (I0) for each of said machine instruction codes (8); in that said counter means (I2) is connected to said decoding means (II), for counting in response to the receipt of each of said microcode start address (I0) to produce a required number of microcode addresses (I0): in that said decoding area (I3a) is responsive to said microcode addresses (I0) from said counter means (I2) to designate microcodes corresponding to said microcode addresses (I0); and in that when the contents of microcodes defining at least two different ones in said machine instruction codes are partially common to each other, said storage means has a value insensitive (or "don't care") function for a certain bit or bits constituting an address(es) of said common microcode(s).

II. A microprogram control device as climed in claim I0, further characterised in that said counter means (I2) is operative to create said microcode addresses for each of said microsteps depending upon said control signal (Sc).

I2. A microprogram control device as claimed in claim I0, further characterised by next microinstruction address determination means (I5) disposed between said decoding means (II) and said counter means (I2), and microcode decoding means (20) disposed after said microcode register means (I4), said next microinstruction address determination means (I5) being operative to select said microcode star address either from said machine instruction decoding means (II) or from said microcode output from said microcode register means (I4) depending upon a control bit (Br) provided to said microinstruction address determination mean (I5) from said microcode decoding means (20).

I3. A microprogram control device as claimed in claim I0, further charaterised in that said counter means (I2) has an area of a high-order bit assigned to a reigster and a remaining area assigned to the counter itself.

I4. A microprogram control device as claimed in claim I0, further characterised in that each of said decoding means (II) and said storage means (I3) is a programmable logic array or a read only memory.

I5. A microprogram control device adapted for use with a microcomputer, which comprises:

decoding means (II) for decoding machine instruction codes (8) input thereto;

counter means (I2), and

storage means (I3) comprising a decoding area (I3a) responsive to microcode addresses and a memory area (I3b) in which microcodes of microprograms defining said machine instruction codes are stored;

characterised in that said decoding means decodes said machine instruction codes (8) to create a microcode start address (I0) for each of said machine instruction codes (8); in that said counter means (I2) is connected to said decoding means (II), for counting in response to the receipt of each of said microcode start address (I0) to produce a required number of microcode addresses (I0); and in that said decoding area (I3a) is responsive to said microcode addresses (I0) from said counter means (I2) to designate microcodes corresponding to said microcode addresses (I0).

MICROCODE STORAGE UNIT

FIG.1.

START
ADDRESSES

MACHINE
INSTRUCTION

MACHINE INSTRUCTION
DECODING CIRCUIT

11

| | | |
|---|---|---|
| INC | 00000110 | 0000000000 |
| MOV | 00001001 | 0000000011 |
| SHIFT | 00001101 | 0000000000 |
| ADD | 00101000 | 0000000101 |

12 — COUNTER

MICROCODE STORAGE
13

INC / SHIFT

MOV

ADD

| | |
|---|---|
| 0000000000 | aaaaaaaaaaaaaaaaaaaaaaaaaaaa |
| 0000000001 | bbbbbbbbbbbbbbbbbbbbbbbbbbbb |
| 0000000010 | cccccccccccccccccccccccccc |
| 0000000011 | dddddddddddddddddddddddddddd |
| 0000000100 | eeeeeeeeeeeeeeeeeeeeeeeeeee |
| 0000000101 | xxxxxxxxxxxxxxxxxxxxxxxxxxx |
| 0000000110 | yyyyyyyyyyyyyyyyyyyyyyyyyyy |
| 0000000111 | zzzzzzzzzzzzzzzzzzzzzzzzzz |

13a

13b

ADDRESS DECODING
AREA

MICROCODE
MEMORY AREA

FIG. 2 .

MICROCODE REGISTER — 14

FIG 3A (CONVENTIONAL)

| | MACHINE INSTRUCTION CODE | COUNTER OUTPUT | MICROCODE |
|---|---|---|---|
| INSTR 1 | 01000101 | 0000 | aaaaa |
| | 01000101 | 0001 | bbbbb |
| | 01000101 | 0010 | ccccc |
| | 01000101 | 0011 | ddddd |
| | 01000101 | 0100 | eeeee |
| | 01000101 | 0101 | fffff |
| | 01000101 | 0110 | ggggg |
| | 01000101 | 0111 | hhhhh |
| INSTR 2 | 10000101 | 0000 | xxxxx |
| | 10000101 | 0001 | yyyyy |
| | 10000101 | 0010 | zzzzz |
| | 10000101 | 0011 | ddddd |
| | 10000101 | 0100 | eeeee |
| | 10000101 | 0101 | fffff |
| | 10000101 | 0110 | ggggg |
| | 10000101 | 0111 | hhhhh |

FIG. 3B. (CONVENTIONAL)

| | MACHINE INSTRUCTION CODE | COUNTER OUTPUT | MICROCODE |
|---|---|---|---|
| INSTR 1 | 01000101 | 0000 | aaaaa |
| | 01000101 | 0001 | bbbbb |
| | 01000101 | 0010 | ccccc |
| | 01000101 | 0011 | JUMP |
| INSTR 2 | 10000101 | 0000 | xxxxx |
| | 10000101 | 0001 | yyyyy |
| | 10000101 | 0010 | zzzzz |
| | 10000101 | 0011 | ddddd |
| | 10000101 | 0100 | eeeee |
| | 10000101 | 0101 | fffff |
| | 10000101 | 0110 | ggggg |
| | 10000101 | 0111 | hhhhh |

FIG.3C.

| | MICROCODE ADDRESS | MICROCODE | |
|---|---|---|---|
| INSTR 1 | 0010010000 | aaaaa | |
| | 0010010001 | bbbbb | |
| | 0010010010 | ccccc | |
| | 001001X011 | ddddd | |
| | 001001X100 | eeeee | |
| | 001001X101 | fffff | COMMON AREA |
| | 001001X110 | ggggg | |
| | 001001X111 | hhhhh | |
| INSTR 2 | 0010011000 | xxxxx | |
| | 0010011001 | yyyyy | —13 |
| | 0010011010 | zzzzz | |

02297344

FIG.4.

MACHINE INSTRUCTION

MACHINE INSTRUCTION DECODING CIRCUIT — 11

8

10

NEXT MICROINSTRUCTION ADDRESS DETERMINATION CIRCUIT — 15

10

10

Ad    Br

COUNTER — 12

10

Sc

MICROCODE STORAGE UNIT

ADDRESS DECODING AREA — 13, 13a

MICROCODE MEMORY AREA — 13b

n

MICROCODE REGISTER — 14

n

10

COMPUTING UNIT STATUS

TIMING CONTROL

MICROCODE DECODING CIRCUIT — 20

GATE CONTROL SIGNAL

---

MICROCODE STORAGE UNIT

MACHINE INSTRUCTION CODE

8

ADDRESS REGISTER — 101

8

ADDRESS DECODING AREA — 103, 103a

COUNTER — 102

4

MICROCODE MEMORY AREA — 103b

n

MICROCODE REGISTER — 104

n

CLK (FETCH)

FIG.5.
(CONVENTIONAL)

MICROCODE ADDRESS    MICROCODE

ADDRESS
REGISTER
COUNTER
101      102

MICROCODE
STORAGE
UNIT

103

| | | |
|---|---|---|
| INC | 000001100000 | aaaaaaaaaaaaaaaaaaaa } MICROPROGRAM |
| | 000001100001 | bbbbbbbbbbbbbbbbbbbb |
| | 000001100010 | cccccccccccccccccccc |
| | 000001100011 | xxxxxxxxxxxxxxxxxxxx − UNUSED |
| MOV | 000010010000 | dddddddddddddddddddd } MICROPROGRAM |
| | 000010010001 | eeeeeeeeeeeeeeeeeeee |
| | 000010010010 | xxxxxxxxxxxxxxxxxxxx } UNUSED |
| | 000010010011 | xxxxxxxxxxxxxxxxxxxx |
| SHIFT | 000011010000 | aaaaaaaaaaaaaaaaaaaa } MICROPROGRAM |
| | 000011010001 | bbbbbbbbbbbbbbbbbbbb |
| | 000011010010 | cccccccccccccccccccc |
| | 000011010011 | xxxxxxxxxxxxxxxxxxxx − UNUSED |
| ADD | 001010000000 | xxxxxxxxxxxxxxxxxxxx } MICROPROGRAM |
| | 001010000001 | yyyyyyyyyyyyyyyyyyyy |
| | 001010000010 | zzzzzzzzzzzzzzzzzzzz |
| | 001010000011 | xxxxxxxxxxxxxxxxxxxx −UNUSED |

103b

103a
ADDRESS
DECODING AREA

MICROCODE
MEMORY AREA

104
MICROCODE
ADDRESS

FIG. 6.
(CONVENTIONAL)

FIG.7.
(PRIOR ART)